# EUROPEAN PATENT SPECIFICATION

(11) **EP 0 506 279 B1**
(45) Date of publication and mention of the grant of the patent: **24.05.1995**
(21) Application number: 92302265.1
(22) Date of filing: 16.03.1992
(51) Int. Cl.: B60C 11/11, B60C 11/04

(54) **Pneumatic tyre**
Luftreifen
Bandage pneumatique

(30) Priority: 18.03.1991 DE 4108745
(43) Date of publication of application: 30.09.1992
(73) Proprietor: SP REIFENWERKE GMBH, 63450 Hanau (DE)
(72) Inventor: Klemm, Albert, W-6116 Eppertshausen (DE); Sponagel, Peter, W-6200 Wiesbaden (DE); Marriott, Peter, Nr Atherstone, Warwickshire CV9 2LP (GB)
(74) Representative: Stewart, Charles Geoffrey

(56) References cited:
- EP-A- 0 119 947
- EP-A- 0 175 829
- EP-A- 0 296 605
- EP-A- 0 455 925
- DE-C- 3 943 359
- DE-U- 8 620 979
- US-A- 4 962 801

## Description

This invention relates to a pneumatic tyre, in particular to a pneumatic tyre pattern which is intended for vehicle speeds above 190 km/h.

A pneumatic tyre is known from EP 0 172 974 having a circumferentially arranged strip having a pattern having continuous curved transverse grooves which extend obliquely to the circumferential direction of the tyre. The transverse grooves are thereby arranged in V-like manner and bound throughgoing transverse ribs which extend from the centre of the tread strip to its edge.

In this arrangement these transverse ribs have at their front side a continuous edge while at the rear side circumferentially extending grooves are provided.

Apart from the fact that this known tyre has different traction behaviour depending on its direction of rotation it is necessary for all the water which is to be displaced when travelling on a wet carriageway to be led away through the transverse grooves.

Furthermore tyre patterns are already known with directionally independent traction behaviour which have continuous curved transverse-grooves which are arranged in essentially S-like manner. In these arrangements grooves are provided in the circumferential direction in both sides of the transverse ribs bounded by the transverse pattern grooves.

With a pattern of this kind the water which may be present on the carriageway must also be exclusively displaced through the transverse grooves.

A high performance tyre, improved in uniformity of tread wear and wandering on grooved roads, having in combination the features of the preamble of claim 1 is known from EP-A-0175829.

According to the present invention a pneumatic tyre is provided with a circumferentially arranged tread which has curved open-ended transverse tread grooves disposed obliquely in the circumferential direction, wherein each transverse groove extends from the central region of the tread strip to the corresponding edge of the tread so that transverse ribs are formed in which longitudinal grooves are provided, the said longitudinal grooves extending fully through the transverse ribs so that the transverse ribs have individual blocks, characterised in that the longitudinal grooves comprise one section or a plurality of sections arranged circumferentially one behind the other wherein at least one section is inclined relative to the circumferential direction and the width of the longitudinal grooves increases from the centre of the tread toward its edge.

The pattern provides good traction characteristics, particularly on wet carriageways, since the water on the carriageway can be led away not only through the transverse grooves but also through the longitudinal grooves. The inclined arrangement of the longitudinal grooves has the advantage that the tyre also has good traction behaviour and lateral guidance behaviour even on road surfaces provided with longitudinal carriageway grooves, such as are provided during improvement work or to reduce the danger of aquaplaning.

The good traction characteristics result in particular from the fact that many uniformly distributed transverse edges are present as a consequence of the arrangement of the longitudinal and transverse pattern grooves provided in accordance with the invention. A further improved behaviour of the tyre during water displacement is achieved in an arrangement in which the spacing of the inclined longitudinal grooves increases from the centre of the tread strip to its edge, so that the block becomes broader towards the outside.

In order to further provide pneumatic tyres which have no longitudinal groove sensitivity the invention also may provide for the longitudinal grooves to have a kinked section. Moreover the kinked oblique longitudinal grooves should have a central section arranged parallel to a tread strip centreline extending in the circumferential direction and two kinked oblique end portions adjoining the central section. Alternatively the oblique longitudinal grooves can have a central section arranged obliquely to a tread centreline extending in circumferential direction and two end sections which adjoin the centre section and extend parallel to the tread centreline. In these arrangements all the longitudinal grooves of a tread strip or their oblique sections should extend parallel to one another. These longitudinal grooves or their oblique sections should include an angle with the tread strip centreline which lies between 5° and 54°, preferably between 20° and 40°, and in particular at 30°.

In order to also improve the lateral guidance of the tread a pneumatic tyre is provided in accordance with a further development of the invention in which the transverse pattern grooves start at the tread strip centreline, with the transverse pattern grooves being so arranged circumferentially that the intersection point of a transverse pattern groove lying on one side of the tread strip centreline lies between two intersection points with the tread strip centreline of two transverse pattern grooves which are arranged directly adjacent one another on the other side of the tread strip centreline.

A further possibility for improving lateral guidance provides a pneumatic tyre in which the transverse pattern grooves start with a spacing from the tread strip centreline.

In these two embodiments of the invention it is ensured that a continuous longitudinal central rib is provided in the region of the tread strip centreline, with the side edges of the longitudinal central rib not only serving for the natural guidance of the tyre but rather also simultaneously serving to improve the traction, since the side edges of the longitudinal central rib are also suitable for transmitting both forces in the tread strip direction and also transverse thereto.

The pneunatic tyre can be expediently fashioned with the features of claims 12 and 13, that is to say, so that the tangent to the transverse tread groove in the region of the tread strip centreline includes an angle α with the latter which lies between 5 and 54°, preferably between 10 and 25° and in particular at 15°, whereas the transverse groove in the region of the edge of the tread strip extends essentially perpendicular to the tread strip centreline. Moreover the width b of the transverse grooves can expediently increase from the tread strip centreline to the edge.

The water displacement of a pneumatic tyre in accordance with the invention can be improved particularly advantageously in that the transverse pattern grooves can increase in trumpet-like manner in their edge region. In this way a nozzle-like effect can be brought about in the edge region of the transverse pattern grooves whereby the leading away of water sideways can be improved.

With the further developments of the invention described in the claims 15 to 19 it is also possible to in particular improve the tractive behaviour of the pneumatic tyre on snow and slush. Thus, the curved transverse grooves on the one side of the tread strip centreline may have a right or left curvature when viewed transversely to the tread strip centreline, and from the edge to the tread strip centreline, and may have a left or right curvature respectively on the other side of the tread strip centreline when viewed from the tread strip centreline to the edge. Moreover, at least some of the blocks which each form a transverse rib should be provided with grooves extending parallel to the transverse rib. The grooves can expediently extend from respectively oppositely disposed edges of the blocks up to the centre of the block, with the grooves being connected together by a central groove. The block may also have sipes which extend substantially in the direction of the tread strip. These sipes can extend parallel to the longitudinal grooves or to their oblique sections.

Further advantageous forms of the invention are described in the claims 20 to 24. Thus a circumferentially continuous longitudinal groove may be provided on each side of the tread strip centreline. The continuous longitudinal grooves can be formed by relatively broad kinked longitudinal grooves in the transverse ribs, with the end sections of the longitudinal grooves being mutually displaced by their width transverse to the tread strip. Moreover, continuous straight longitudinal grooves can be provided which extend parallel to the tread strip centreline. The longitudinal grooves arranged symmetrically to the tread strip centreline preferably bound a circumferentially continuous central rib. The transverse grooves may with advantage extend up to and into the centre rib and form grooves there.

The invention will now be explained in more details in the following by way of example and with reference to the drawings in which as shown:
Figure 1 is a schematic illustration of a tread pattern in accordance with the invention;
Figure 2 is a schematic illustration of a tyre pattern similar to Figure 1 wherein additional sipes are provided in the blocks;
Figure 3 is a schematic illustration of a tread pattern similar to Figure 2, with the blocks partly having an additional central sipe;
Figure 4 is a schematic illustration of a tyre pattern similar to Figure 1 wherein a circumferentially extending central groove or sipe is provided;
Figure 5 is a schematic illustration of a tyre pattern in accordance with the invention with additional continuous straight longitudinal grooves being provided; and
Figure 6 is a schematic illustration of a tyre pattern in accordance with the invention with a continuous longitudinal central rib being bounded by continuous straight longitudinal grooves.

In the various Figures of the drawings elements which correspond to one another are designated with the same reference numerals.

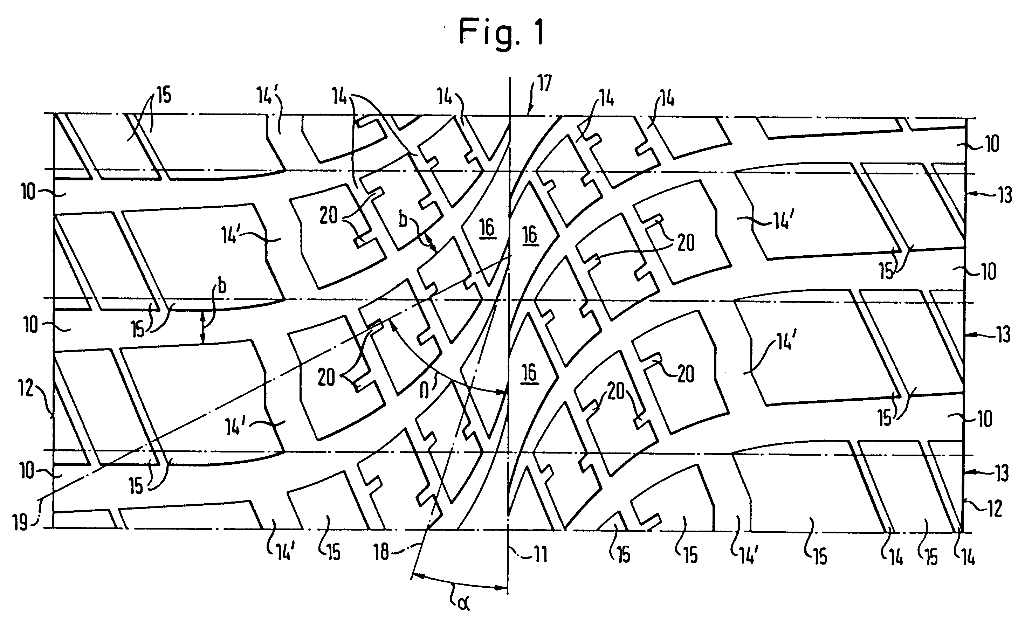

Figure 1 shows a tyre pattern for the tread strip of a pneumatic tyre having a plurality of transverse grooves 10 which extend from the tread centreline 11 to the tread edge 12 such that transverse ribs 13 are formed in each case between successive adjacent transverse grooves 10. The transverse ribs 13 have longitudinal grooves 14,14' which lie at an anble to the centreline 11 and which subdivide the respective transverse ribs 13 into individual blocks 5.

Each transverse groove 10 on one side of the tread centreline 11 is thereby so arranged in the circumferential direction of the pneumatic tyre that its point of intersection with the tread strip centreline 11 respectively lies essentially centrally between the intersection points of two directly sequential transverse grooves 10 on the other side of the tread strip centreline 11. In this manner the centremost transverse rib sections 16 adjacent to the tread strip centreline 11 merges into corresponding transverse rib sections 16 on the other side of the tread centreline 11. Thus a continuous longitudinal central rib 17 is formed which extends substantially in a zig-zag manner around the tyre and has a plurality of transverse edges arranged at angles to the tread strip centreline 11.

The transverse grooves 10 which extend obliquely to the tread centreline 11 are curved in such a way that a tangent 18 applied to the transverse grooves in the region of the tread centreline 11 is at an angle α to the tread centreline 11 and may for example lie between 15° and 20°. In the region of the edge 12 of the tread the transverse grooves 10 lie approximately perpendicular to the tread centreline 11.

Thus, a connection line 19 between the intersection points of a transverse groove 10 with the tread centreline 11 and the edge 12, is inclined relative to the tread centreline 11 at an angle β which lies between 45° and 85°, preferably 65°.

The longitudinal grooves 14 in the transverse ribs 13 extend substantially parallel to one another and are so inclined relative to the centreline 11 that they include an angle of 5° to 45°, preferably an angle of 30° to the centreline 11.

In addition to the straight longitudinal grooves 14 longitudinal grooves 14' are provided which are kinked and have a centre section arranged substantially parallel to the tread centreline 11 between two obliquely disposed section. In this arrangement the mutually associated kinked longitudinal grooves 14' are so arranged in the individual transverse ribs 13 that they essentially form a continuous longitudinal groove which extends along the tyre circumference in a sawtooth-like manner.

In order to provide good water displacement in the circumferential direction of the tyre with this arrangement, the kinked longitudinal grooves 14' have a larger width than the straight longitudinal grooves 14.

The blocks 15 lying in the region between the kinked longitudinal grooves 14' on each side of the centreline 11 are provided with short blind grooves 20 which extend substantially parallel to the transverse grooves 10.

In order to bring about good water displacement to the sides, i.e. in the axial direction with reference to the axis of rotation of the tyre, the width b of the transverse grooves 10 increases from the centreline 11 towards the tread edge 12.

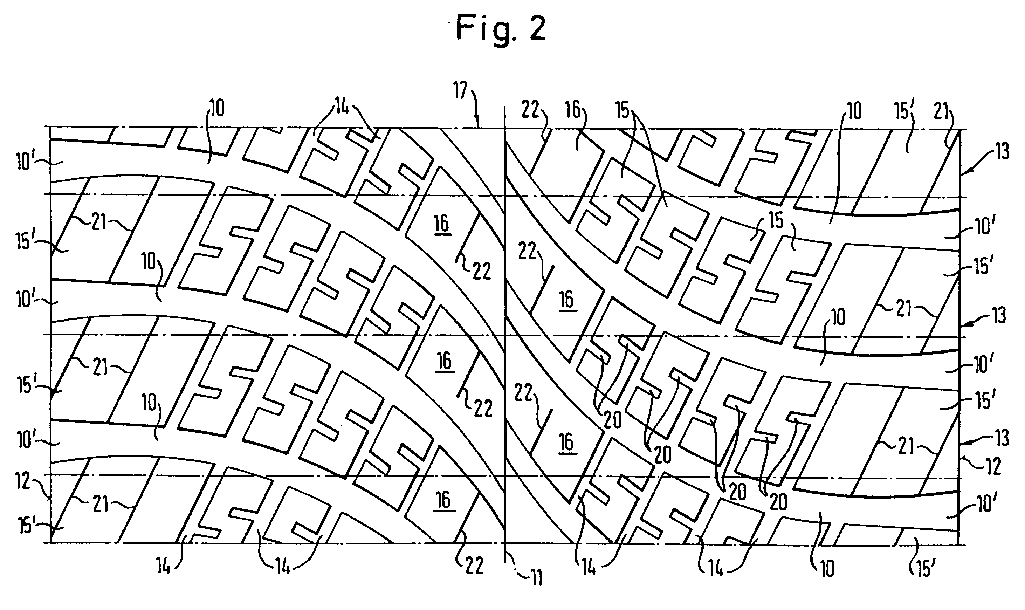

In this arrangement the width b can - as illustrated in Figure 1 - continuously increase from the centreline 11 to the tread edge 12 or - as illustrated in Figure 2 - as seen from the centreline 11 to the tread edge 12 first increase fractionally and then subsequently remain constant in order to then increase substantially in the region of the tread edge 12 so that the transverse grooves 10 have an edge section 10' which broadens in a trumpet-like manner.

The tyre tread illustrated in Figure 2 is distinguished from that of Figure 1, apart from the trumpet-like edge sections 10', also in that the blocks 15' which lie adjacent to the tread edge 12 of the tread strip and the transverse rib section 16 disposed adjacent to the tread strip centreline 11 have sipes 21 or 22. The sipes 21 are continuous in the blocks 15 while the sipes 22 in the transverse rib sections 16 only extend from the respective convex edge of the transverse rib section 16 into the latter but do not pass through it.

Moreover, in the tyre pattern of Figure 2, only straight longitudinal grooves 14 are provided which all extend parallel to one another.

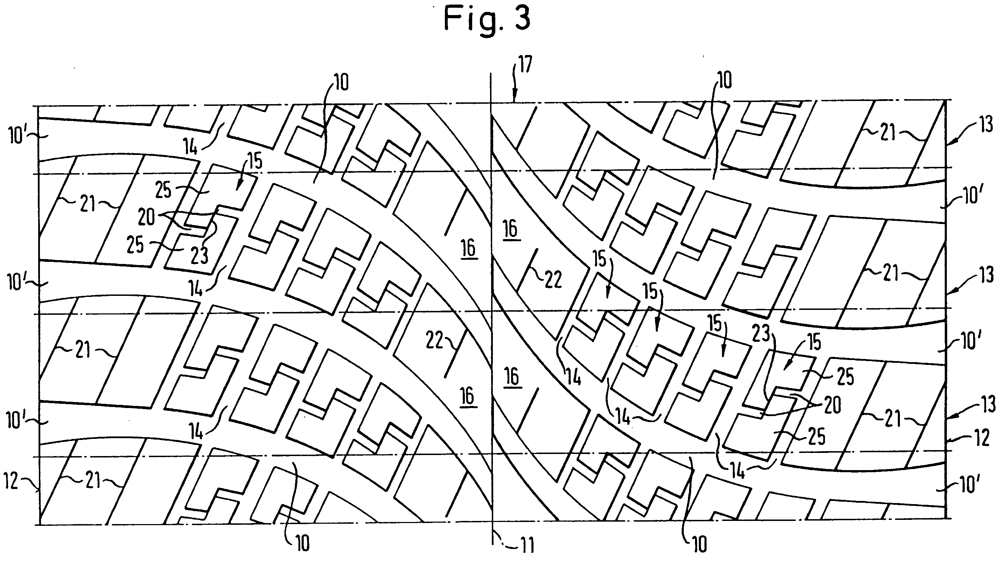

In the tread pattern illustrated in Figure 3 the central blocks 15 of each transverse rib 13, i.e. the blocks 15 which lie between the respective transverse rib section 16 and the respective blocks 15' adjacent to the edge 12 of the tread strip are provided with grooves 20 which extend parallel to the transverse grooves 10 in each case up to the centre of the block 15. Between the cuts 20 of each block 15 there is formed a central sipe 23 so that each block 15 is subdivided into two essentially L-shaped half blocks 25, the corresponding limbs of which contact one another in the region of the central sipe 23.

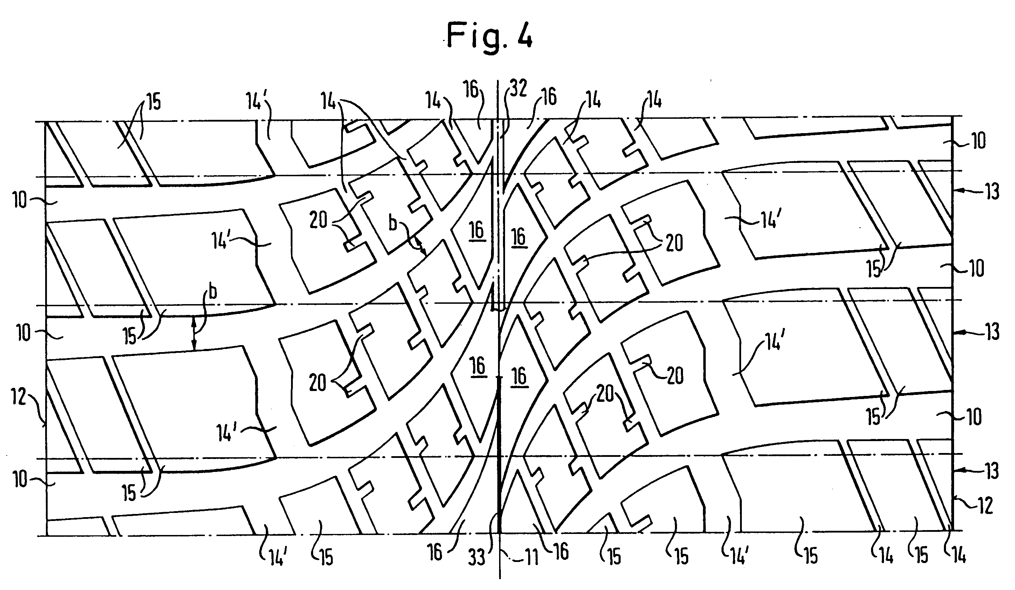

The tyre pattern illustrated in Figure 4 is distinguished from that of Figure 1 only in that a circumferentially extending central groove 32 is provided - as shown at the top in Figure 4 - or alternatively thereto a centrally extending central sipe 33 is provided - as shown at the bottom in Figure 4. The circumferentially extending central groove 32 or the central sipe 33 bounds the transverse rib sections 16 adjacent to the tread strip centreline 11 towards the centre of the tread strip so that the transverse rib sections 16 are formed as individual blocks.

A circumferentially extending central groove or sipe of this kind can also be provided in tyre patterns such as are described with reference to Figures 2 and 3.

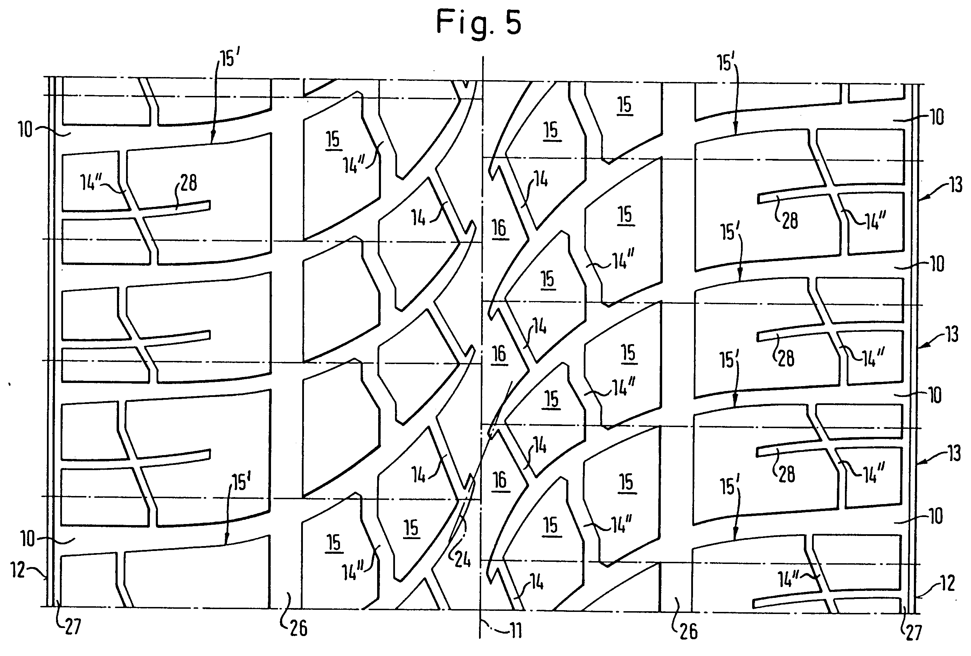

The tyre pattern illustrated in Figure 5 first of all has curved transverse grooves 10 which are circumferentially such that each transverse groove 10 is essentially aligned on one side of the centreline 11 with an associated transverse groove 10 on the other side of the centreline 11. Thus, in this arrangement, the tangents to two transverse grooves 10 arranged adjacent one another in the region of the centreline 11 merge into one another in an essentially aligned manner as illustrated at 24.

The transverse grooves 13 are so formed in this tread pattern that the block 15 which lies adjacent to the corresponding transverse rib section 16 is separated by an oblique continuous straight transverse rib 14 from the transverse rib sections 16, while a kinked longitudinal groove 14'' is provided between this block 15 and the adjoining block 15 on the other side, with the kinked longitudinal groove having an oblique central section between two sections which extend parallel to the tread strip centreline 11.

Between the blocks 15 and the blocks 15' adjacent to the tread edge 12 there is in each case provided a relatively broad straight longitudinal groove which extends parallel to the tread centreline 11, with these longitudinal grooves forming a circumferentially continuous, straight, longitudinal groove 26 for all transverse ribs 13.

The blocks 15' adjacent the tread edge 12 are separated from the edge 12 by a narrow longitudinal groove 27, the width of which lies approximately in the region of the width of a cut. Cuts 28 are arranged in the blocks. The cuts 28 extend parallel to the transverse grooves 10 and are cut crosswise by a kinked narrow longitudinal groove 14'', in such a way that the blocks 15' are subdivided into individual partial blocks.

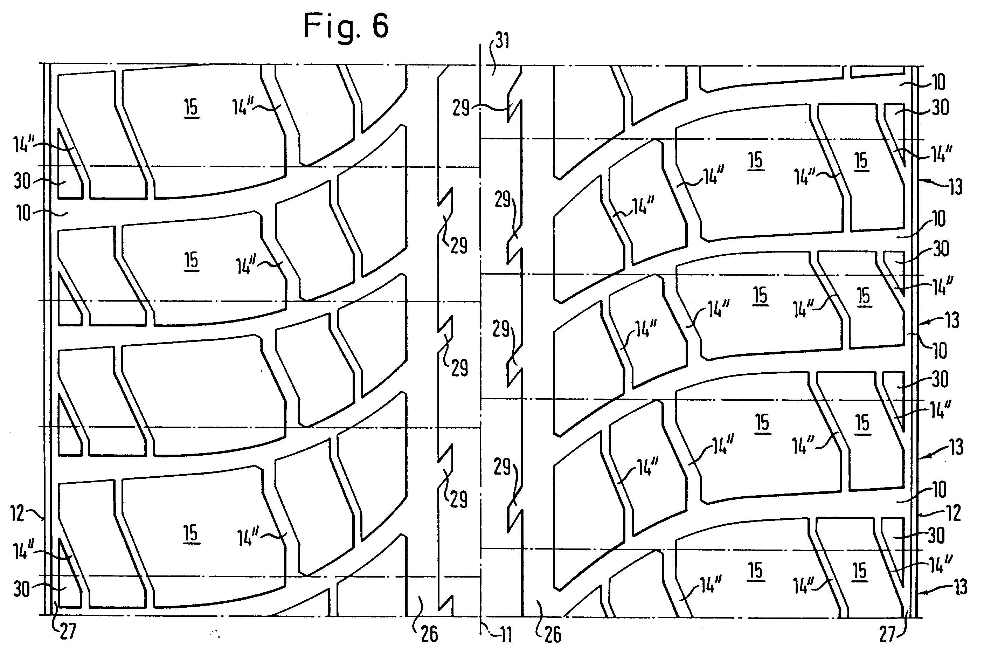

The tread pattern of Figure 6 has, alongside the transverse ribs 13 which are separated from one another by the transverse grooves 10, a continuous essentially straight, longitudinal central rib 31 which is bounded on both sides of the tread centreline 11 by a circumferentially extending longitudinal groove 26.

The curved transverse grooves 10 are circumferentially arranged with respect to the transverse grooves 10 on the other side of the tread centreline 11 in accordance with the embodiment of Figure 5 and extend up to and into the longitudinal rib 31 so that they form cuts 29 there.

The transverse ribs 13 are subdivided into individual blocks 15 by kinked longitudinal grooves 14'' which each have an oblique central section.

A narrow continuous longitudinal groove 27 is provided between the edge 12 of the tread in the transverse ribs 13 and a kinked longitudinal groove 14'' is branched off from this longitudinal groove 27 in the region of each transverse rib 13 so that its parallel section facing the edge coincides with the longitudinal groove 27. In this manner each transverse rib 13 has a trapezoidal partial block 30 adjacent to the edge.

In addition to the pattern elements shown with reference to the drawing the individual blocks and/or ribs can be structured with customary pattern structuring elements.

In particular sipes or other combinations of sipes and grooves (cut outs) can be provided in place of the grooves in each case. Moreover it should be pointed out that the individual blocks can become broader from the tread centreline to the edge. The same applies for the respective grooves in the blocks.

## Claims

1. A pneumatic tyre with a circumferentially arranged tread which has curved open-ended transverse tread grooves (10) disposed obliquely to the circumferential direction, wherein each transverse groove (10) extends from the central region of the tread strip to the corresponding edge (12) of the tread so that transverse ribs (13) are formed in which longitudinal grooves (14,14',14'') are provided, the said longitudinal grooves (14',14'') extending fully through the transverse ribs (13) so that the transverse ribs (13) have individual blocks (15,15'), characterised in that the longitudinal grooves (14,14',14'') comprise one section or a plurality of sections arranged circumferentially one behind the other wherein at least one section is inclined relative to the circumferential direction and the width of the longitudinal grooves (14,14',14'') increases from the centre of the tread towards its edge (12).

2. A pneumatic tyre in accordance with claim 1, characterised in that the spacing of the inclined longitudinal grooves (14,14',14'') increases from the centre of the tread strip to its edge (12), so that the blocks (15,15') become broader towards the tread edge.

3. A pneumatic tyre in accordance with claims 1 or 2, characterised in that the inclined longitudinal grooves (14',14'') have a kinked profile.

4. A pneumatic tyre in accordance with claim 3, characterised in that the inclined longitudinal grooves (14') have a central section arranged parallel to the tread centreline (11) and two oblique end portions adjoining the central section.

5. A pneumatic tyre in accordance with claim 3, characterised in that the inclined longitudinal grooves (14'') have a central section arranged obliquely to a tread strip centreline (11) extending in the circumferential direction and two end sections which adjoin the centre section and extend parallel to the tread strip centreline (11).

6. A pneumatic tyre in accordance with any of the preceding claims, characterised in that all longitudinal grooves (14,14',14'') of the tread or their oblique sections extend parallel to one another.

7. A pneumatic tyre in accordance with any of the preceding claims, characterised in that the longitudinal grooves (14,14',14'') or their oblique sections include an angle with the tread centreline (11) which lies between 5° and 54°.

8. A pneumatic tyre in accordance with any of the preceding claims, characterised in that the transverse grooves (10) start at the tread centreline (11), with the transverse grooves (10) being so arranged circumferentially that the intersection point of a transverse groove (10) lying on one side of the tread strip centreline (11) lies between two intersection points with the tread centreline (11) of two transverse grooves (10) which are arranged directly adjacent one another on the other side of the tread centreline (11).

9. A pneumatic tyre in accordance with any of claims 1 to 7, characterised in that the transverse grooves (10) start at a distance from the tread centreline.

10. A pneumatic tyre in accordance with claim 9, characterised in that the transverse grooves (10) are so arranged that the intersection point of an extension of a transverse groove (10) lying on one side of the longitudinal centreline (11) with the longitudinal centreline (11) coincides with the intersection point of the extension of an associated transverse groove (10) laying on the other side of the longitudinal centreline (11) with the longitudinal centreline (11).

11. A pneumatic tyre in accordance with any of the preceding claims, characterised in that the tangent (18) of the transverse groove (10) in the region of the tread centreline (11) includes an angle (α) with the latter which lies between 5 and 54°, whereas the transverse groove (10) in the region of the edge (12) of the tread extends essentially perpendicular to the tread centreline (11).

12. A pneumatic tyre in accordance with any of the preceding claims, characterised in that the width (b) of the transverse grooves (10) increases from the tread centreline (11) to the tread edge (12).

13. A pneumatic tyre in accordance with any of the preceding claims, characterised in that the transverse grooves (10) are shaped in a trumpet-like shape in their edge regions (10').

14. A pneumatic tyre in accordance with any of the preceding claims, characterised in that the curved transverse grooves (10) on the one side of the tread centreline (11) have a right or left curvature when viewed transversely to the tread strip centreline, and from the edge (12) to the tread strip centreline (11), and have a left or right curvature respectively on the other side of the tread strip centreline (11) when viewed from the tread centreline to the edge (12).

15. A pneumatic tyre in accordance with any of the preceding claims, characterised in that at least some of the blocks (15) which together form a transverse rib (13) are provided with grooves (20,28) extending parallel to the transverse rib (13).

16. A pneumatic tyre in accordance with claim 15, characterised in that the grooves (20) extend from respective oppositely disposed edges of the blocks (15) to the centre of the block, with the grooves (20) being connected together by a central groove (23).

17. A pneumatic tyre in accordance with any of the preceding claims, characterised in that the blocks (15') have sipes (22) which extend substantially in the direction of the tread centreline (11).

18. A pneumatic tyre in accordance with claim 17, characterised in that the sipes (22) extend parallel to the longitudinal grooves (14,14',14'') or to their oblique sections.

19. A pneumatic tyre in accordance with any of the preceding claims, characterised in that a circumferentially continuous longitudinal groove (26) is provided on each side of the tread centreline (11).

20. A pneumatic tyre in accordance with claim 19, characterised in that the continuous longitudinal grooves (26) are formed by relatively broad kinked longitudinal grooves (14') in the transverse ribs (13), the end sections of the longitudinal grooves (14') being mutually displaced by their width transverse to the tread centreline (11).

21. A pneumatic tyre in accordance with claim 19, characterised in that continuous straight longitudinal grooves (26) are provided which extend parallel to the tread strip centreline (11).

22. A pneumatic tyre in accordance with claim 19 or claim 21, characterised in that the longitudinal grooves (26) arranged symmetrically to the tread strip centreline (11) bound a circumferentially continuos central rib (31).

23. A pneumatic tyre in accordance with claim 22, characterised in that the transverse pattern grooves (10) extend up to and into the centre rib (31) and form grooves (29) there.

## Patentansprüche

1. Luftreifen mit einem umfangsmäßig angeordneten Laufstreifen, der schräg zu seiner Umfangsrichtung gekrümmt verlaufende, offene durchgehende Querprofilrillen (10) aufweist, die sich jeweils vom Mittelbereich des Laufstreifens bis zum entsprechenden Rand (12) des Laufstreifens erstrecken, so daß Querrippen (13) gebildet werden, in denen sich vollständig durch die Querrippen (13) hindurch erstreckende Längsrillen (14, 14', 14'') vorgesehen sind, so daß die Querrippen (13) einzelne Blöcke (15, 15') aufweisen,
gekennzeichnet dadurch, daß die Längsrillen (14, 14', 14'') einen Abschnitt oder eine Vielzahl von Abschnitten umfassen, der oder die umfangsmäßig einer nach dem anderen angeordnet ist oder sind, wobei wenigstens ein Abschnitt bezüglich der Umfangsrichtung geneigt ist, und daß die Breite der Längsrillen (14, 14', 14'') von der Mitte des Laufstreifens zu seinem Rand (12) hin zunimmt.

2. Luftreifen nach Anspruch 1,
dadurch gekennzeichnet, daß der Abstand der schrägen Längsrillen (14, 14', 14'') von der Mitte des Laufstreifens zu seinem Rand (12) hin zunimmt, so daß die Blöcke (15, 15') zum Laufstreifenrand hin breiter werden.

3. Luftreifen nach Anspruch 1 oder 2,
dadurch gekennzeichnet, daß die schrägen Längsrillen (14', 14'') ein geknicktes Profil haben.

4. Luftreifen nach Anspruch 3,
dadurch gekennzeichnet, daß die geneigten Längsrillen (14') einen parallel zu einer Laufstreifenmittellinie (11) angeordneten Mittelabschnitt und zwei daran anschließende, schräge Endabschnitte aufweisen.

5. Luftreifen nach Anspruch 3,
dadurch gekennzeichnet, daß die geneigten Längsrillen (14'') einen schräg zu einer in Umfangsrichtung verlaufenden Laufstreifenmittellinie (11) angeordneten Mittelabschnitt und zwei daran anschließende, sich parallel zur Laufstreifenmittellinie (11) erstreckende Endabschnitte aufweisen.

6. Luftreifen nach einem der vorhergehenden Ansprüche, dadurch gekennzeichnet, daß alle Längsrillen (14, 14', 14'') des Laufstreifens bzw. deren schräge Abschnitte parallel zueinander verlaufen.

7. Luftreifen nach einem der vorhergehenden Ansprüche, dadurch gekennzeichnet, daß die Längsrillen (14, 14', 14'') bzw. deren schräge Abschnitte mit der Laufstreifenmittellinie (11) einen Winkel einschließen, der zwischen 5° und 54° liegt.

8. Luftreifen nach einem der vorhergehenden Ansprüche, dadurch gekennzeichnet, daß die Querrillen (10) an der Laufstreifenmittellinie (11) beginnen, wobei die Querrillen (10) umfangsmäßig so angeordnet sind, daß der Schnittpunkt einer auf der einen Seite der Laufstreifenmittellinie (11) liegenden Querrille (10) mit der Laufstreifenmittellinie (11) zwischen zwei Schnittpunkten zweier unmittelbar benachbarter, auf der anderen Seite der Laufstreifenmittellinie (11) angeordneter Querrillen (10) liegt.

9. Luftreifen nach einem der Ansprüche 1 bis 7,
dadurch gekennzeichnet, daß die Querrillen (10) mit Abstand zur Laufstreifenmittellinie beginnen.

10. Luftreifen nach Anspruch 9,
dadurch gekennzeichnet, daß die Querrillen (10) so angeordnet sind, daß der Schnittpunkt einer Verlängerung einer auf einer Seite der Längsmittellinie (11) liegenden Querrille (10) mit der Längsmittellinie (11) mit dem Schnittpunkt der Verlängerung einer zugeordneten, auf der anderen Seite der Längsmittellinie (11) liegenden Querrille (10) mit der Längsmittellinie (11) zusammenfällt.

11. Luftreifen nach einem der vorhergehenden Ansprüche, dadurch gekennzeichnet, daß die Tangente (18) der Querrille (10) im Bereich der Laufstreifenmittellinie (11) mit dieser einen Winkel (α) einschließt, der zwischen 5 und 54° liegt, während die Querrille (10) im Bereich des Randes (12) des Laufstreifens im wesentlichen senkrecht zur Laufstreifenmittellinie (11) verläuft.

12. Luftreifen nach einem der vorhergehenden Ansprüche, dadurch gekennzeichnet, daß die Breite (b) der Querrillen (10) von der Laufstreifenmittellinie (11) zum Laufflächenrand (12) hin zunimmt.

13. Luftreifen nach einem der vorhergehenden Ansprüche, dadurch gekennzeichnet, daß die Querrillen (10) in ihren Randbereichen (10') trompetenartig ausgeführt sind.

14. Luftreifen nach einem der vorhergehenden Ansprüche, dadurch gekennzeichnet, daß die gekrümmten Querrillen (10) auf der einen Seite der Laufstreifenmittellinie (11) quer zu dieser gesehen vom Rand (12) zur Laufstreifenmittellinie (11) eine Rechts- bzw. eine Linkskrümmung und auf der anderen Seite der Laufstreifenmittellinie (11) von dieser zum Rand (12) hin gesehen eine Links- bzw. Rechtskrümmung aufweisen.

15. Luftreifen nach einem der vorhergehenden Ansprüche, dadurch gekennzeichnet, daß zumindest einige der jeweils eine Querrippe (13) bildende Blöcke (15) mit parallel zur Querrippe (13) verlaufenden Einschnitten (20, 28) versehen sind.

16. Luftreifen nach Anspruch 15,
dadurch gekennzeichnet, daß die Einschnitte (20) sich von jeweils gegenüberliegenden Kanten der Blöcke (15) bis zur Blockmitte erstrecken, wobei die Einschnitte (20) durch eine Mittelrille (23) miteinander verbunden sind.

17. Luftreifen nach einem der vorhergehenden Ansprüche, dadurch gekennzeichnet, daß die Blöcke (15') sich im wesentlichen in Richtung der Laufstreifenmittellinie (11) erstreckende durchgehende Lamellen (22) aufweisen.

18. Luftreifen nach Anspruch 17,
dadurch gekennzeichnet, daß die Lamellen (22) parallel zu den Längsrillen (14, 14', 14'') bzw. deren schrägen Abschnitten verlaufen.

19. Luftreifen nach einem der vorhergehenden Ansprüche, dadurch gekennzeichnet, daß auf jeder Seite der Laufstreifenmittellinie (11) eine umfangsmäßig durchgehende Längsrille (26) vorgesehen ist.

20. Luftreifen nach Anspruch 19,
dadurch gekennzeichnet, daß die durchgehenden Längsrillen (26) von relativ breiten geknickten Längsrillen (14') in den Querrippen (13) gebildet sind, die mit ihren Endabschnitten jeweils um ihre Breite gegeneinander quer zur Laufstreifenmittellinie (11) versetzt sind.

21. Luftreifen nach Anspruch 19,
dadurch gekennzeichnet, daß parallel zur Laufstreifenmittellinie (11) verlaufende durchgehende gerade Längsrillen (26) vorgesehen sind.

22. Luftreifen nach Anspruch 19 oder 21,
dadurch gekennzeichnet, daß die symmetrisch zur Laufstreifenmittellinie (11) angeordneten Längsrillen (26) eine umfangsmäßig durchgehende Mittelrippe (31) begrenzen.

23. Luftreifen nach Anspruch 22,
dadurch gekennzeichnet, daß sich die Querprofilrillen (10) bis in die Mittelrippe (31) hin erstrecken und dort Einschnitte (29) bilden.

## Revendications

1. Pneumatique ayant une bande de roulement placée circonférentiellement et qui a des gorges transversales courbes (10) à extrémités ouvertes disposées obliquement par rapport à la direction circonférentielle, dans lequel chaque gorge transversale (10) est disposée de la région centrale de la bande de roulement vers le bord correspondant (12) de la bande de roulement afin que des nervures transversales (13) soient formées et comportent des gorges longitudinales (14, 14', 14''), ces gorges longitudinales (14', 14'') étant disposées entièrement à travers les nervures transversales (13) afin que les nervures transversales (13) comportent des blocs individuels (15, 15'), caractérisé en ce que les gorges longitudinales (14, 14', 14'') comprennent un ou plusieurs tronçons placés circonférentiellement les uns derrière les autres, un tronçon au moins étant incliné par rapport à la direction circonférentielle, et la largeur des gorges longitudinales (14, 14', 14'') augmente du centre de la bande de roulement vers son bord (12).

2. Pneumatique selon la revendication 1, caractérisé en ce que l'espacement des gorges longitudinales inclinées (14, 14', 14'') augmente du centre de la bande de roulement vers son bord (12), si bien que les blocs (15, 15') s'élargissent vers le bord de la bande de roulement.

3. Pneumatique selon la revendication 1 ou 2, caractérisé en ce que les gorges longitudinales inclinées (14', 14'') ont un profil non rectiligne.

4. Pneumatique selon la revendication 3, caractérisé en ce que les gorges longitudinales inclinées (14') ont un tronçon central parallèle à l'axe central (11) de la bande de roulement et deux parties obliques d'extrémité adjacentes au tronçon central.

5. Pneumatique selon la revendication 3, caractérisé en ce que les gorges longitudinales inclinées (14'') ont un tronçon central placé obliquement par rapport à l'axe central (11) de la bande de roulement disposé dans la direction circonférentielle et deux tronçons d'extrémité adjacents au tronçon central et qui sont parallèles à l'axe central (11) de la bande de roulement.

6. Pneumatique selon l'une quelconque des revendications précédentes, caractérisé en ce que toutes les gorges longitudinales (14, 14', 14'') de la bande de roulement ou leurs tronçons obliques sont parallèles mutuellement.

7. Pneumatique selon l'une quelconque des revendications précédentes, caractérisé en ce que les gorges longitudinales (14, 14', 14'') ou leurs tronçons obliques font un angle avec l'axe central (11) qui est compris entre 5° et 54°.

8. Pneumatique selon l'une quelconque des revendications précédentes, caractérisé en ce que les gorges transversales (10) partent au niveau de l'axe central (11) de la bande de roulement, les gorges transversales (10) étant disposées circonférentiellement de manière que le point d'intersection d'une gorge transversale (10) placée d'un premier côté de l'axe central (11) de la bande de roulement est compris entre deux points d'intersection avec l'axe central (11) de deux gorges transversales (10) qui sont directement adjacentes l'une à l'autre de l'autre côté de l'axe central (11) de la bande de roulement.

9. Pneumatique selon l'une des revendications 1 à 7, caractérisé en ce que les gorges transversales (10) partent à une certaine distance de l'axe central de la bande de roulement.

10. Pneumatique selon la revendication 9, caractérisé en ce que les gorges transversales (10) sont disposées afin que le point d'intersection d'un prolongement d'une gorge transversale (10) placée d'un premier côté de l'axe central longitudinal (11) avec l'axe central longitudinal (11) coïncide avec le point d'intersection du prolongement d'une gorge transversale associée (10), placée de l'autre côté de l'axe central longitudinal (11), avec l'axe central longitudinal (11).

11. Pneumatique selon l'une des revendications précédentes, caractérisé en ce que la tangente (18) à la gorge transversale (10) dans la région de l'axe central longitudinal (11) inclut un angle (α) avec cet axe qui est compris entre 5° et 54°, alors que la gorge transversale (10) dans la région du bord (12) de la bande de roulement est essentiellement perpendiculaire à l'axe central (11) de la bande de roulement.

12. Pneumatique selon l'une des revendications précédentes, caractérisé en ce que la largeur (b) des gorges transversales (10) augmente de l'axe central (11) de la bande de roulement vers son bord (12).

13. Pneumatique selon l'une quelconque des revendications précédentes, caractérisé en ce que les gorges transversales (10) ont une configuration de trompette dans leur région de bord (10').

14. Pneumatique selon l'une quelconque des revendications précédentes, caractérisé en ce que les gorges transversales courbes (10) d'un premier côté de l'axe central (11) de la bande de roulement ont une courbure à droite ou à gauche lorsqu'elles sont vues transversalement à l'axe central de la bande de roulement, et du bord (12) vers l'axe central (11) de la bande de roulement, et ont une courbure à gauche ou à droite respectivement de l'autre côté de l'axe central (11) de la bande de roulement, lorsqu'elles sont vues depuis l'axe central de la bande de roulement vers le bord (12).

15. Pneumatique selon l'une quelconque des revendications précédentes, caractérisé en ce que certains des blocs au moins (15) qui forment ensemble une nervure transversale (13) ont des gorges (20, 28) qui sont parallèles à la nervure transversale (13).

16. Pneumatique selon la revendication 15, caractérisé en ce que les gorges (20) partent des bords respectifs opposés des blocs (15) vers le centre du bloc, les gorges (20) étant raccordées par une gorge centrale (23).

17. Pneumatique selon l'une quelconque des revendications précédentes, caractérisé en ce que les blocs (15') ont des fentes (22) qui sont disposées pratiquement dans la direction de l'axe central (11) de la bande de roulement.

18. Pneumatique selon la revendication 17, caractérisé en ce que les fentes (22) sont parallèles aux gorges longitudinales (14, 14', 14'') ou à leurs tronçons obliques.

19. Pneumatique selon l'une quelconque des revendications précédentes, caractérisé en ce qu'une gorge longitudinale circonférentiellement continue (26) est placée de chaque côté de l'axe central (11) de la bande de roulement.

20. Pneumatique selon la revendication 19, caractérisé en ce que les gorges longitudinales continues (26) sont formées par des gorges longitudinales non rectilignes relativement larges (14') dans les nervures transversales (13), les tronçons d'extrémité des gorges longitudinales (14') étant mutuellement décalés de leur largeur transversalement à l'axe central (11) de la bande de roulement.

21. Pneumatique selon la revendication 19, caractérisé en ce que les gorges longitudinales rectilignes continues (26) sont disposées afin qu'elles soient parallèles à l'axe central (11) de la bande de roulement.

22. Pneumatique selon la revendication 19 ou 21, caractérisé en ce que les gorges longitudinales (26) placées symétriquement à l'axe central (11) de la bande de roulement sont délimitées par une nervure centrale circonférentiellement continue (31).

23. Pneumatique selon la revendication 22, caractérisé en ce que les gorges transversales (10) de la sculpture rejoignent la nervure centrale (31) et y pénètrent en formant des gorges (29).
